# EUROPEAN PATENT APPLICATION

(11) **EP 4 610 108 A1**
(43) Date of publication of application: **03.09.2025**
(21) Application number: 24202396.8
(22) Date of filing: 25.09.2024
(51) Int. Cl.: B60Q 1/28, F21S 43/14, G02B 30/27, B60R 13/04, B60R 19/50, B60R 19/52, F21W 104/00

(54) **LIGHTING DEVICE FOR VEHICLE**

(30) Priority: 27.02.2024 KR 20240028257
(71) Applicant: Hyundai Mobis Co., Ltd., Gangnam-gu Seoul 06141 (KR)
(72) Inventor: KIM, Min Ji, 16891 Yongin-si, Gyeonggi-do (KR); KIM, Do Hyung, 16891 Yongin-si, Gyeonggi-do (KR); KIM, Phil Su, 16891 Yongin-si, Gyeonggi-do (KR)
(74) Representative: Jung, Minkyu

(57) **Abstract**

Disclosed is a lighting device for a vehicle according to the present disclosure including: a housing; a lens made of a transparent material, coupled to the housing, and configured to cover an opening provided in the housing; a light source installed in the housing and configured to emit light toward the lens; a first pattern layer arranged between the light source and the lens and provided with one or more first pattern portions; and a second pattern layer arranged between the first pattern layer and the lens and provided with one or more second pattern portions.

## Description

### BACKGROUND

### Field

Exemplary embodiments of the present disclosure relate to a lighting device for a vehicle, and more particularly, to a lighting device for a vehicle, which may implement grille lighting.

### Description of the Related Art

In recent years, vehicle manufacturers have sought to compensate for the reduced visual density at the front of an electric vehicle with a distinctive illuminated image and add new value to the space where a grille used to be on the electric vehicle through unexpected effects, and have invested heavily in 3D stereoscopic grille lighting for an eye-catching visual effect.

Conventionally, there have been limitations in terms of grille lighting content and technological implementation solutions that may effectively express a brand identity. Furthermore, as the lighting area has expanded to include the grille, various issues have arisen, including increased development and production costs, weight gain due to the use of multiple illuminating devices, and the like. Thus, there is a need for improvement to resolve these limitations and issues.

The related art of the present disclosure is disclosed in Korean Patent Application Publication No. 10-2023-0077201 (published on June 1, 2023 and entitled "THE LIGHTING GRILLE FOR THE ELECTRIC VEHICLE").

### SUMMARY

An objective of the present disclosure is to provide a lighting device for a vehicle, which may provide a three-dimensional image to a driver, a nearby vehicle, and a pedestrian through implementation of grille lighting.

A lighting device for a vehicle according to the present disclosure includes: a housing; a lens made of a transparent material, coupled to the housing, and configured to cover an opening provided in the housing; a light source installed in the housing and configured to emit light toward the lens; a first pattern layer arranged between the light source and the lens and provided with one or more first pattern portions; and a second pattern layer arranged between the first pattern layer and the lens and provided with one or more second pattern portions.

The first pattern layer and the second pattern layer may include a light-transmitting material through which light emitted from the light source may be transmitted.

The first pattern layer may include a three-dimensional pattern externally recognizable through the lens.

The three-dimensional pattern may be implemented as a three-dimensional image when the light source is turned on.

The three-dimensional pattern may be one of a lencell pattern or a lenticular pattern.

The second pattern portions may be provided on both ends of the second pattern layer, respectively.

The second pattern layer may include two-dimensional patterns externally recognizable through the lens.

The two-dimensional patterns may have different levels of transparency.

The two-dimensional patterns may be formed by etching a pigment applied to a surface of the second pattern layer or by film printing on the surface of the second pattern layer.

The housing may be mounted on a grille provided on a front part of a vehicle body.

The lighting device for a vehicle of the present disclosure may be provided with the three-dimensional pattern so as to express a three-dimensional optical illusion pattern on a vehicle's original surface through the first pattern layer on which a three-dimensional image is implemented when the light source is turned on.

The lighting device for a vehicle of the present disclosure may also offer distinctive product quality by providing both non-illuminated and illuminated images.

The lighting device for a vehicle of the present disclosure may also implement a natural three-dimensional image from the three-dimensional pattern to the two-dimensional patterns by combining the first pattern layer provided with the three-dimensional pattern and the second pattern layer provided with the two-dimensional patterns.

### BRIEF DESCRIPTION OF THE DRAWINGS

FIG. 1 is a front view of a lighting device for a vehicle according to embodiments of the present disclosure, when viewed from the front of a vehicle body.
FIG. 2 is a cross-sectional view schematically showing the lighting device for a vehicle according to embodiments of the present disclosure.
FIG. 3 is an exploded perspective view schematically showing the lighting device for a vehicle according to embodiments of the present disclosure.
FIG. 4 is an exemplary view schematically showing a light source in a turned-off state in the lighting device for a vehicle to which a lencell pattern is applied according to embodiments of the present disclosure.
FIG. 5 is an exemplary view schematically showing the light source in a turned-on state in the lighting device for a vehicle to which a lencell pattern is applied according to embodiments of the present disclosure.
FIG. 6 is an exemplary view schematically showing the light source in a turned-off state in the lighting device for a vehicle to which a lenticular pattern is applied according to embodiments of the present disclosure.
FIG. 7 is an exemplary view schematically showing the light source in a turned-on state in the lighting device for a vehicle to which a lenticular pattern is applied according to embodiments of the present disclosure.

### DETAILED DESCRIPTION

Hereinafter, a lighting device for a vehicle will be described below with reference to the accompanying drawings through various exemplary embodiments. It should be considered that the thickness of each line or the size of each component in the drawings may be exaggeratedly illustrated for clarity and convenience of description. In addition, the terms as used herein are defined in consideration of functions of the present disclosure, and these terms may change depending on a user or operator's intention or practice. Therefore, these terms should be defined based on the entirety of the disclosure set forth herein.

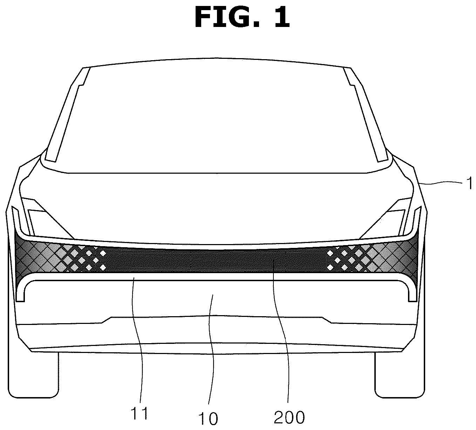

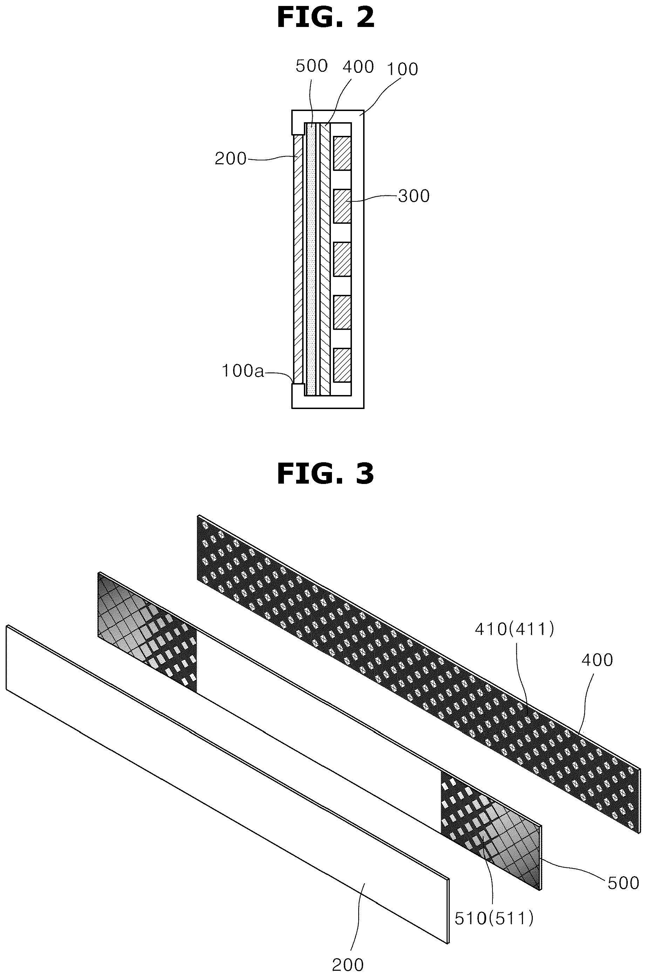

FIG. 1 is a front view of a lighting device for a vehicle according to embodiments of the present disclosure, when viewed from the front of a vehicle body. FIG. 2 is a cross-sectional view schematically showing the lighting device for a vehicle according to embodiments of the present disclosure. FIG. 3 is an exploded perspective view schematically showing the lighting device for a vehicle according to embodiments of the present disclosure.

Referring to FIGS. 1 to 3, the lighting device for a vehicle according to embodiments of the present disclosure includes a housing 100, a lens 200, a light source 300, a first pattern layer 400, and a second pattern layer 500, which are described in detail below.

The housing 100 may be mounted on a vehicle body 1. The housing 100 may be mounted on a grille 11 provided on a front part 10 of the vehicle body 1. Here, the grille 11 may refer to a portion, on which a radiator grille is mounted, of the front part 10 of the vehicle body 1.

The housing 100 may be formed in a box shape, with an open front portion thereof facing the front of the vehicle body 1.

The lens 200 may be coupled to the housing 100. The lens 200 may be formed approximately in a plate shape. A rim may be fixedly installed on the housing 100 to entirely surround the first pattern layer 400 and the second pattern layer 500, which will be described later.

The lens 200 may be formed in a flat or curved shape to match a shape of an opening 100a formed in the housing 100. The lens 200 may cover the opening 100a provided in the front portion of the housing 100 facing the front of the vehicle body 1.

The lens 200 may be exposed to the outside, and may be made of a transparent material that transmits light. For example, the lens 200 may include a plastic material such as polycarbonate.

The light source 300 may be installed in the housing 100. The light source 300 may be fixedly installed on an inner surface of the housing 100. The light source 300 may be arranged at a position spaced apart from the lens 200 and facing the lens 200.

The light source 300 may emit light into the housing 100. To be more specific, the light source 300 may emit light toward the direction in which the lens 200 is located. A plurality of the light sources 300 may be provided, and may be arranged, along a lengthwise direction of the grille 11, that is, a width direction of the vehicle body 1, to be spaced apart from each other. The light source 300 may include a light-emitting diode (LED).

The first pattern layer 400 may be arranged between the light source 300 and the lens 200. The first pattern layer 400 may be arranged to be spaced apart from the lens 200. The first pattern layer 400 may include a light-transmitting material through which light emitted from the light source 300 is transmitted. The first pattern layer 400 may be formed in a form of a lens or film.

The first pattern layer 400 may be provided with one or more first pattern portions 410. The first pattern portion 410 may include a three-dimensional pattern 411. The three-dimensional pattern 411 may be one of a lencell pattern or a lenticular pattern.

The first pattern portion 410 may be externally recognizable. To be more specific, when the light source 300 is turned on at night, the three-dimensional pattern 411 may be implemented as a three-dimensional image and externally recognizable through the lens 200. Conversely, when the light source 300 is turned off during the daytime, the first pattern portion 410 may not be externally recognizable.

The second pattern layer 500 may be arranged between the first pattern layer 400 and the lens 200. In one embodiment, the second pattern layer 500 may be arranged to be spaced apart from the lens 200 and/or the first pattern layer 400. In another embodiment, the second pattern layer 500 may be coupled to the lens 200 and/or the first pattern layer 400.

The second pattern layer 500 may include a light-transmitting material through which light emitted from the light source 300 is transmitted. The second pattern layer 500 may be formed in a form of a lens or film.

The second pattern layer 500 may be provided with one or more second pattern portions 510. The second pattern portions 510 may be provided on both ends of the second pattern layer 500, respectively. To be more specific, the second pattern portions 510 may be provided on both ends of the second pattern layer 500 in a lengthwise direction thereof, respectively.

The second pattern portions 510 may include two-dimensional patterns 511. The two-dimensional patterns 511 may be externally recognizable. To be more specific, when the light source 300 is turned off during the daytime, the two-dimensional patterns 511 may be externally recognizable through the lens 200. In addition, when the light source 300 is turned on at night, the two-dimensional patterns 511 may be externally recognizable through the lens 200.

In one embodiment, the two-dimensional patterns 511 may be formed by etching a pigment applied to a surface of the second pattern layer 500. To be more specific, the two-dimensional patterns 511 may be formed by laser etching. In another embodiment, the two-dimensional patterns 511 may be formed, by film printing, on a surface of the second pattern layer 500.

A plurality of the two-dimensional patterns 511 may be provided on the second pattern layer 500. The plurality of the two-dimensional patterns 511 may have different levels of transparency. For example, the plurality of the two-dimensional patterns 511 may become gradually less transparent toward the ends of the second pattern layer 500.

The following is the description of an operation of the lighting device for a vehicle having the configuration described above according to embodiments of the present disclosure.

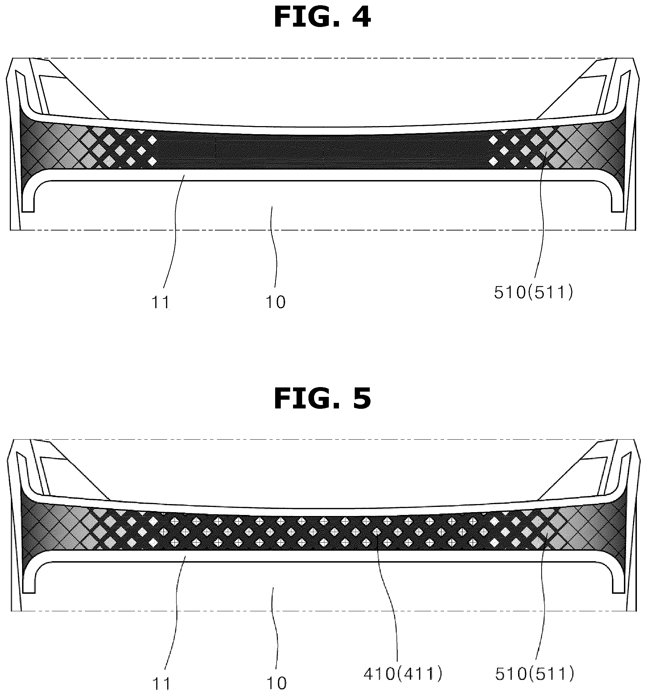

FIG. 4 is an exemplary view schematically showing a light source in a turned-off state in the lighting device for a vehicle to which a lencell pattern is applied according to embodiments of the present disclosure. FIG. 5 is an exemplary view schematically showing the light source in a turned-on state in the lighting device for a vehicle to which a lencell pattern is applied according to embodiments of the present disclosure.

Referring to FIG. 4, the first pattern portion 410 provided in the first pattern layer 400 may be a lencell pattern, and when the light source 300 is turned off during the daytime, the second pattern portions 510 provided in the second pattern layer 500 may be externally recognizable through the lens 200. However, the first pattern portion 410 may not be externally recognizable through the lens 200.

Referring to FIG. 5, when the light source 300 is turned on at night, the two-dimensional patterns 511 of the second pattern layer 500 may be externally recognizable through the lens 200, and the lencell pattern of the first pattern layer 400 may be externally recognizable through the lens 200.

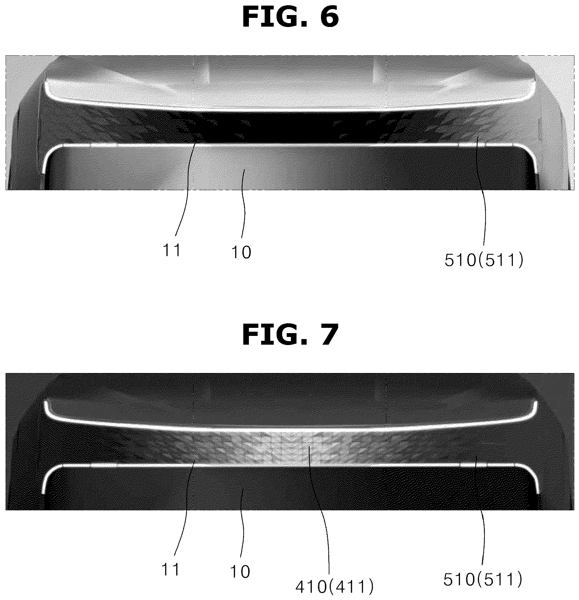

FIG. 6 is an exemplary view schematically showing the light source in a turned-off state in the lighting device for a vehicle to which a lenticular pattern is applied according to embodiments of the present disclosure. FIG. 7 is an exemplary view schematically showing the light source in a turned-on state in the lighting device for a vehicle to which a lenticular pattern is applied according to embodiments of the present disclosure.

Referring to FIG. 6, the first pattern portion 410 provided in the first pattern layer 400 is a lenticular pattern, and when the light source 300 is turned off during the daytime, the second pattern portions 510 provided in the second pattern layer 500 may be externally recognizable through the lens 200. However, the first pattern portion 410 may not be externally recognizable through the lens 200.

Referring to FIG. 7, when the light source 300 is turned on at night, the two-dimensional patterns 511 of the second pattern layer 500 may be externally recognizable through the lens 200, and the lenticular pattern of the first pattern layer 400 may be externally recognizable through the lens 200.

The lighting device for a vehicle according to embodiments of the present disclosure may be provided with the three-dimensional pattern 411 so as to express a three-dimensional optical illusion pattern on a vehicle's original surface through the first pattern layer 400 on which a three-dimensional image is implemented when the light source 300 is turned on.

The lighting device for a vehicle according to embodiments of the present disclosure may offer distinctive product quality by providing both non-illuminated and illuminated images, which are different from each other.

The lighting device for a vehicle according to embodiments of the present disclosure may implement a natural three-dimensional image from the three-dimensional pattern 411 to the two-dimensional patterns 511 by combining the first pattern layer 400 provided with the three-dimensional pattern 411 and the second pattern layer 500 provided with the two-dimensional patterns 511.

Although the present disclosure has been described with reference to the embodiments illustrated in the drawings, the embodiments are for illustrative purposes only, and those skilled in the art will appreciate that various modifications and other equivalent embodiments are possible from the embodiments. Thus, the true technical scope of the present disclosure should be defined by the following claims.

## Claims

1. A lighting device for a vehicle comprising:
a housing;
a lens made of a transparent material, coupled to the housing, and configured to cover an opening provided in the housing;
a light source installed in the housing and configured to emit light toward the lens;
a first pattern layer arranged between the light source and the lens and provided with one or more first pattern portions; and
a second pattern layer arranged between the first pattern layer and the lens and provided with one or more second pattern portions.

2. The lighting device for the vehicle of claim 1, wherein the first pattern layer and the second pattern layer comprise a light-transmitting material through which light emitted from the light source is transmitted.

3. The lighting device for the vehicle of claim 1 or 2, wherein the first pattern layer comprises a three-dimensional pattern externally recognizable through the lens.

4. The lighting device for the vehicle of claim 3, wherein the three-dimensional pattern is implemented as a three-dimensional image when the light source is turned on.

5. The lighting device for the vehicle of claim 3 or 4, wherein the three-dimensional pattern is one of a lencell pattern or a lenticular pattern.

6. The lighting device for the vehicle of any one of claims 1 to 5, wherein the second pattern portions are provided on both ends of the second pattern layer, respectively.

7. The lighting device for the vehicle of any one of claims 1 to 6, wherein the second pattern layer comprises two-dimensional patterns externally recognizable through the lens.

8. The lighting device for the vehicle of claim 7, wherein the two-dimensional patterns have different levels of transparency.

9. The lighting device for the vehicle of claim 7 or 8, wherein the two-dimensional patterns are formed by etching a pigment applied to a surface of the second pattern layer or by film printing on the surface of the second pattern layer.

10. The lighting device for the vehicle of any one of claims 1 to 9, wherein the housing is mounted on a grille provided on a front part of a vehicle body.
